(19) **Europäisches Patentamt / European Patent Office / Office européen des brevets**

(11) **EP 4 783 527 A1**

(12) **EUROPEAN PATENT APPLICATION**
published in accordance with Art. 153(4) EPC

(43) Date of publication:
**29.07.2026  Bulletin 2026/31**

(21) Application number: **24878930.7**

(22) Date of filing: **12.10.2024**

(51) International Patent Classification (IPC):
**H04L 27/26** (2006.01)

(52) Cooperative Patent Classification (CPC):
**H04L 27/26; H04W 72/50; H04W 72/53**

(86) International application number:
**PCT/CN2024/124570**

(87) International publication number:
**WO 2025/082286 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.10.2023  CN 202311344497**

(71) Applicant: HUAWEI TECHNOLOGIES CO., LTD.
**Shenzhen, Guangdong 518129 (CN)**

(72) Inventors:
• LIAN, Jin
 **Shenzhen, Guangdong 518129 (CN)**
• HU, Chen
 **Shenzhen, Guangdong 518129 (CN)**
• CAI, Shijie
 **Shenzhen, Guangdong 518129 (CN)**
• LIU, Kunpeng
 **Shenzhen, Guangdong 518129 (CN)**

(74) Representative: **Thun, Clemens**
**Mitscherlich PartmbB**
**Karlstraße 7**
**80333 München (DE)**

(54) **COMMUNICATION METHOD, APPARATUS AND SYSTEM**

(57)    This application relates to a communication method, apparatus, and system. A vector group corresponding to C reference signal ports is determined based on channel information corresponding to the C reference signal ports of at least two terminal devices. The vector group includes C sub-vector groups in one-to-one correspondence with the C reference signal ports and is used to determine at least two first reference signal resource groups, corresponding to the at least two terminal devices. The at least two first reference signal resource groups correspond to C cyclic shift indexes. Among the C cyclic shift indexes, cyclic shift indexes corresponding to first reference signal resource groups of different terminal devices are different, and the C cyclic shift indexes are different. The C cyclic shift indexes are in one-to-one correspondence with the C sub-vector groups. The vector group in embodiments of this application can reflect actual channel characteristics. Consequently, a channel transformed using the vector group has lower sparsity. This helps reduce reference signal overhead.

FIG. 4

**Description**

CROSS-REFERENCE TO RELATED APPLICATIONS

This application claims priority to Chinese Patent Application No. 202311344497.4, filed with the China National Intellectual Property Administration on October 17, 2023 and entitled "COMMUNICATION METHOD, APPARATUS, AND SYSTEM", which is incorporated herein by reference in its entirety.

TECHNICAL FIELD

This application relates to the field of communication technologies, and in particular, to a communication method, apparatus, and system.

BACKGROUND

In long term evolution (long term evolution, LTE) and new radio access technology (new radio access technology, NR), multiple-input multiple-output (multiple-input multiple-output, MIMO) technology is widely used. To fully realize MIMO performance, a base station needs to obtain an accurate downlink channel, which is used to calculate a precoding (precoding) vector from the base station to a terminal device, enabling downlink precoding to improve transmission quality.

In existing mechanisms, based on channel properties, a discrete Fourier transform (discrete fourier transform, DFT) basis can be used to transform a frequency domain channel into the delay domain, and/or to transform a time domain channel into the Doppler domain. Because the channel is relatively sparse in the delay domain or Doppler domain, reference signal overhead can be reduced.

Although sparsity of the channel can be improved to some extent through transforming by using the DFT basis, the transformed channel is only relatively sparse in the time domain or Doppler domain. Its actual sparsity remains insufficient. As a result, reference signal overhead is still comparatively high.

SUMMARY

Embodiments of this application provide a communication method, apparatus, and system, to improve sparsity of a channel, thereby reducing reference signal overhead.

According to a first aspect, a first communication method is provided. The method may be performed by a terminal device, may be performed by another device including functions of a terminal device, or may be performed by a chip system (or a chip) or another functional module. The chip system or the functional module can implement the functions of the terminal device. The chip system or the functional module is, for example, disposed in the terminal device. The terminal device is, for example, a first terminal device among the at least two terminal devices. Alternatively, the method may be performed by a network device, or by another device that includes a function of a network device, or by a chip system (or a chip) or another functional module. The chip system or the functional module can implement the function of the network device. The chip system or the functional module is, for example, disposed in a network device. The method includes: determining, based on channel information corresponding to C reference signal ports of at least two terminal devices, a vector group corresponding to the C reference signal ports, where the vector group includes C sub-vector groups in one-to-one correspondence with the C reference signal ports, the vector group is used to determine at least two first reference signal resource groups, the at least two first reference signal resource groups correspond to the at least two terminal devices, the at least two first reference signal resource groups correspond to C cyclic shift indexes, cyclic shift indexes that correspond to first reference signal resource groups corresponding to different terminal devices and that are in the C cyclic shift indexes are different, the C cyclic shift indexes are different, the C cyclic shift indexes are in one-to-one correspondence with the C sub-vector groups, and C is an integer greater than 1.

In embodiments of this application, the vector group corresponding to the C reference signal ports may be determined based on the channel information corresponding to the C reference signal ports. The vector group may be used, for example, for domain transformation on a channel. Because the vector group is determined by considering actual channel information and reflects actual channel characteristics, a channel transformed using the vector group can have lower sparsity. This helps reduce reference signal overhead.

In an optional implementation, the method is applied to a first terminal device among the at least two terminal devices, or is applied to another device including a function of a terminal device, or is applied to a chip system (or a chip) or another functional module. The chip system or the functional module can implement a function of the first terminal device. The method further includes: receiving a downlink reference signal, and obtaining channel information of M terminal devices, where the M terminal devices belong to the at least two terminal devices, and M is a positive integer; determining, based on the downlink reference signal, channel information corresponding to a first reference signal port, where the first reference signal port belongs to the C reference signal ports, and the first reference signal port is a reference signal port of the first terminal device; and determining, based on the channel information corresponding to the first reference signal port and the channel information of the M terminal devices, the channel information corresponding to the C reference signal ports. In this manner, the first terminal device may receive the downlink reference signal, to determine channel information of a reference signal port of the first terminal device based on the downlink reference signal. In addition, another terminal device may further send channel information of the another terminal device to the first terminal device, so that the first terminal device can obtain the channel information of the at least two terminal devices, and can further determine the channel information corresponding to the C reference signal ports. In this manner, participation of the network device can be reduced, and flexibility can be improved.

In an optional implementation, the method further includes: indicating the vector group to a network device; or indicating, to a network device, a sub-vector group that is in the vector group and that corresponds to the reference signal port of the first terminal device; or indicating, to a network device, a first sub-vector group in the vector group, and indicating a manner of determining at least one other sub-vector groups in the vector group based on the first sub-vector group. If the terminal device determines the vector group, the terminal device may indicate the vector group or indicate a sub-vector group in the vector group to the network device, so that the network device does not need to determine the vector group according to another method. This can simplify implementation of the network device.

In an optional implementation, indicating the vector group to the network device includes: sending first information to the network device, where the first information indicates all or part of elements in the vector group, all the or the part of elements belongs to all or part of vectors included in the vector group, and all the or the part of vectors belongs to all or part of sub-vector groups included in the vector group. The terminal device indicates the vector group to the network device. An indication manner is that part or all of elements in the vector group are indicated to the network device, so that the vector group is indicated.

In an optional implementation, the first information includes indexes of candidate values corresponding to all the or the part of elements, the candidate values corresponding to all the or the part of elements is included in at least one candidate value set, and the at least one candidate value set includes one or more of the following: a candidate value set corresponding to an amplitude of an element, where the candidate value set includes a plurality of different candidate values, and each candidate value corresponds to one index; or a candidate value set corresponding to a phase of an element, where the candidate value set includes a plurality of different candidate values, and each candidate value corresponds to one index; or a candidate value set corresponding to a real part of an element, where the candidate value set includes a plurality of different candidate values, and each candidate value corresponds to one index; or a candidate value set corresponding to an imaginary part of an element, where the candidate value set includes a plurality of different candidate values, and each candidate value corresponds to one index; or a candidate value set corresponding to a real part and an imaginary part of an element, where the candidate value set includes a plurality of different candidate values, and each candidate value corresponds to one index. Obtaining the first information by using the candidate value set may be understood as quantizing the vector group. For example, for an element in the vector group, the terminal device may separately determine, from one or more candidate value sets, a candidate value with a highest similarity to the element, and the first information may include an index of the candidate value. Through quantization, the vector group can be indicated to the network device, and indication overhead can be reduced.

In an optional implementation, indicating the first sub-vector group to the network device includes: sending second information to the network device, where the first information includes quantization information of all or part of elements in the first sub-vector group, and all the or the part of elements belongs to all or part of vectors included in the first sub-vector group. The terminal device needs to indicate a sub-vector group to the network device. An indication manner is that part or all of elements in the sub-vector group are indicated to the network device, so that the sub-vector group is indicated.

In an optional implementation, the first information includes indexes of candidate values corresponding to all the or the part of elements, the candidate values corresponding to all the or the part of elements is included in at least one candidate value set, and the at least one candidate value set includes one or more of the following: a candidate value set corresponding to an amplitude of an element, where the candidate value set includes a plurality of different candidate values, and each candidate value corresponds to one index; or a candidate value set corresponding to a phase of an element, where the candidate value set includes a plurality of different candidate values, and each candidate value corresponds to one index; or a candidate value set corresponding to a real part of an element, where the candidate value set includes a plurality of different candidate values, and each candidate value corresponds to one index; or a candidate value set corresponding to an imaginary part of an element, where the candidate value set includes a plurality of different candidate values, and each candidate value corresponds to one index; or a candidate value set corresponding to a real part and an imaginary part of an element, where the candidate value set includes a plurality of different candidate values, and each candidate value corresponds to one index. Obtaining the first information by using the candidate value set may be understood as quantizing the sub-vector group. For example, for an element in the sub-vector group, the terminal device may separately determine, from one or more candidate value sets, a candidate value with a highest similarity to the element, and the first information may include an index of the candidate value. Through quantization, the sub-vector group can be indicated to the network device, and indication overhead can be reduced. Optionally, candidate value sets applicable to different sub-vector groups are the same or different.

In an optional implementation, the method is applied to a network device, or is applied to another device including a function of a network device, or is applied to a chip system (or a chip) or another functional module. The chip system or the functional module can implement the function of the network device. The channel information corresponding to the C reference signal ports is determined based on at least two second reference signal resource groups corresponding to the at least two terminal devices. The second reference signal resource group may be used to send an uplink reference signal, which is equivalent to that in this manner, the network device may determine, based on the uplink reference signal received by using the second reference signal resource group, the channel information corresponding to the C reference signal ports.

In an optional implementation, the method further includes: receiving uplink reference signals from the C reference signal ports based on the at least two second reference signal resource groups; and determining, based on the uplink reference signals, the channel information corresponding to the C reference signal ports.

In an optional implementation, the method is applied to a network device, or is applied to another device including a function of a network device, or is applied to a chip system (or a chip) or another functional module. The chip system or the functional module can implement the function of the network device. The method further includes: receiving the channel information corresponding to the C reference signal ports. For example, the channel information corresponding to the C reference signal ports is from the terminal device. To be specific, the terminal device may determine the channel information of the C reference signal ports and send the channel information of the C reference signal ports to the network device, and the network device does not need to determine the channel information of the C reference signal ports according to another method. This can simplify implementation of the network device.

In an optional implementation, the method further includes: indicating the vector group to a first terminal device among the at least two terminal devices; or indicating, to a first terminal device among the at least two terminal devices, a sub-vector group that is in the vector group and that corresponds to a reference signal port of the first terminal device; or indicating, to a first terminal device among the at least two terminal devices, a first sub-vector group in the vector group, and indicating a manner of determining at least one other sub-vector groups in the vector group based on the first sub-vector group; or indicating the vector group via broadcasting; or indicating a first sub-vector group in the vector group via broadcasting, and indicating, via broadcasting, information about a manner of determining at least one other sub-vector groups in the vector group based on the first sub-vector group. After determining the vector group, the network device may indicate the vector group in a unicast, multicast, or broadcast manner, or indicate a sub-vector group in the vector group. The manner is flexible.

In an optional implementation, that the vector group is used to determine the at least two first reference signal resource groups corresponding to the at least two terminal devices includes: the vector group is used to determine a time domain resource and/or a frequency domain resource included in the at least two first reference signal resource groups. For example, the time domain resource and/or the frequency domain resource used to send the uplink reference signal can be determined based on the vector group.

In an optional implementation, determining, based on the channel information corresponding to the C reference signal ports of the at least two terminal devices, the vector group corresponding to the C reference signal ports includes: determining a first sub-vector group $B_0$ in the vector group based on the channel information corresponding to the C reference signal ports; and determining an $i$th sub-vector group $B_i$ based on the first sub-vector group $B_0$ and a cyclic shift index corresponding to the $i$th sub-vector group $B_i$, $i$th sub-vector group $B_i$ is any sub-vector group other than the first sub-vector group $B_0$ in the vector group. This may be understood as that the network device performs cyclic shift migration based on $B_0$, so that the reference signal ports corresponding to C different cyclic shift indexes are separated without overlapping.

In an optional implementation, determining the $i$th vector group $B_i$ based on the first sub-vector group $B_0$ and the cyclic shift index corresponding to the $i$th sub-vector group $B_i$ includes: determining an $l$th vector $b_i^l$ in the $i$th sub-vector group $B_i$ based on an $l$th vector $b_0^l$ in the first sub-vector group $B_0$ and the cyclic shift index $c_i$ corresponding to the $i$th sub-vector group $B_i$. $B_i$ based on $B_0$, or there may be another manner of determining $B_i$ based on $B_0$. This is not limited.

In an optional implementation, the at least two first reference signal resource groups correspond to the C reference signal ports, and each reference signal port corresponds to one time-domain unit or one frequency-domain unit in the at least two first reference signal resource groups. Channel estimation can be performed, by using the uplink reference signals carried on resources in the at least two first reference signal resource groups, on the channels corresponding to the C reference signal ports.

In an optional implementation, among the C reference signal ports, time-domain units or frequency-domain units corresponding to different reference signal ports have same relative positions in different resource groups in a first quantity of resource groups. The first quantity is less than or equal to N1/C or N2/C, N1 is a quantity of time-domain units corresponding to the C reference signal ports, and N2 is a quantity of frequency-domain units corresponding to the C reference signal ports.

In an optional implementation, among the C reference signal ports, time-domain units or frequency-domain units corresponding to different reference signal ports have different relative positions in different resource groups in a first quantity of resource groups. The first quantity is less than or equal to N1/C or N2/C, N1 is a quantity of time-domain units corresponding to the C reference signal ports, and N2 is a quantity of frequency-domain units corresponding to the C reference signal ports.

In addition to the first reference signal resource group, in embodiments of this application, there is another grouping manner for the time-domain unit or the frequency-domain unit. For example, the C reference signal ports may correspond to the N1 time-domain units or the N2 frequency-domain units, and the N1 time-domain units may be grouped into the first quantity of resource groups. In each of part or all of the first quantity of resource groups, C1 time-domain units may be included. Time-domain units that are included in different resource groups and that correspond to a same reference signal port may have same relative positions or different relative positions in corresponding resource groups. Alternatively, the N2 frequency-domain units may be grouped into the first quantity of resource groups (in this case, the first quantity may be the same as or different from the first quantity in the first quantity of resource groups into which the time-domain units are grouped). In each of part or all of the first quantity of resource groups, C2 frequency-domain units may be included. Frequency-domain units that are included in different resource groups and that correspond to a same reference signal port may have same relative positions or different relative positions in corresponding resource groups, offering flexibility.

According to a second aspect, a communication apparatus is provided. The communication apparatus may be the terminal device according to the first aspect. The communication apparatus has a function of the foregoing terminal device. The communication apparatus is, for example, a terminal device, a large device including the terminal device, or a functional module in the terminal device, for example, a baseband apparatus or a chip system. The terminal device is, for example, the first terminal device according to the first aspect. Alternatively, the communication apparatus may be the network device according to the first aspect. The communication apparatus has a function of the network device. The communication apparatus is, for example, the network device, a large device including the network device, or a functional module, for example, a baseband apparatus or a chip system, in the network device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In an optional implementation, the processing unit is configured to determine, based on channel information corresponding to C reference signal ports of at least two terminal devices, a vector group corresponding to the C reference signal ports, where the vector group includes C sub-vector groups in one-to-one correspondence with the C reference signal ports, the vector group is used to determine at least two first reference signal resource groups, the at least two first reference signal resource groups correspond to the at least two terminal devices, the at least two first reference signal resource groups correspond to C cyclic shift indexes, cyclic shift indexes that correspond to first reference signal resource groups corresponding to different terminal devices and that are in the C cyclic shift indexes are different, the C cyclic shift indexes are different, the C cyclic shift indexes are in one-to-one correspondence with the C sub-vector groups, and C is an integer greater than 1.

In an optional implementation, the communication apparatus further includes a storage unit (sometimes also referred to as a storage module), and the processing unit is configured: be coupled to the storage unit, and execute a program or instructions in the storage unit, to enable the communication apparatus to perform a function of the terminal device (for example, the first terminal device) or the network device according to the first aspect.

According to a third aspect, a communication apparatus is provided. The communication apparatus may be a terminal device, or may be a chip or a chip system used in a terminal device. The terminal device is, for example, the first terminal device according to the first aspect. Alternatively, the communication apparatus may be a network device, or a chip or a chip system used in a network device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the terminal device (for example, the first terminal device) or the network device in the foregoing aspects.

According to a fourth aspect, a communication system is provided, and includes a terminal device and a network device. The terminal device is configured to perform the method performed by the terminal device in the foregoing aspects. The network device is configured to perform the method performed by the network device in the foregoing aspects. Optionally, the terminal device includes, for example, the first terminal device according to the first aspect, or includes the at least two terminal devices according to the first aspect. For example, the terminal device may be implemented via the communication apparatus according to the second aspect or the third aspect. The network device may be implemented via the communication apparatus according to the second aspect or the third aspect.

According to a fifth aspect, a computer-readable storage medium is provided. The computer-readable storage medium is configured to store a computer program or instructions. When the computer program or the instructions are run, the method performed by the terminal device (for example, the first terminal device) or the network device in the foregoing aspects is implemented.

According to a sixth aspect, a computer program product including instructions is provided. When the computer program product runs on a computer, the methods according to the foregoing aspects are implemented.

According to a seventh aspect, a chip system is provided, and includes a processor and an interface. The processor is configured to invoke instructions from the interface and run the instructions, to enable the chip system to implement the method in the foregoing aspects.

BRIEF DESCRIPTION OF DRAWINGS

FIG. 1 is a diagram of performing domain transformation on a channel by using a DFT basis;
FIG. 2 is a diagram of reference signal overhead;
FIG. 3 is a diagram of an architecture of a communication network to which an embodiment of this application is applicable;
FIG. 4 is a flowchart of a communication method according to an embodiment of this application;
FIG. 5 is a diagram of a vector group according to an embodiment of this application;
FIG. 6 is a diagram of reference signal overhead according to an embodiment of this application;
FIG. 7 is a diagram of a domain transformation process according to an embodiment of this application;
FIG. 8 is a diagram of resource groups according to an embodiment of this application;
FIG. 9 is a diagram of a vector group according to an embodiment of this application;
FIG. 10 is a diagram of a domain transformation process according to an embodiment of this application;
FIG. 11 is a flowchart of another communication method according to an embodiment of this application;
FIG. 12 is a diagram of an apparatus according to an embodiment of this application; and
FIG. 13 is a diagram of another apparatus according to an embodiment of this application.

DESCRIPTION OF EMBODIMENTS

To make objectives, technical solution, and advantages of embodiments of this application clearer, the following further describes embodiments of this application in detail with reference to accompanying drawings.

In embodiments of this application, unless otherwise specified, a quantity of nouns indicates "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including any combination of singular items (pieces) or plural items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, sequences, time sequences, priorities, importance, or the like of the plurality of objects. For example, a first reference signal resource group and a second reference signal resource group may be a same reference signal resource group, or may be different reference signal resource groups. In addition, this name does not indicate that the two reference signal resource groups include different resources, application scenarios, priorities, importance, or the like. In addition, step numbers in embodiments described in this application are merely intended to distinguish between different steps, but are not intended to limit a sequence of the steps. For example, S401 may be performed before S402, or may be performed after S402, or may be simultaneously performed with S402.

The following describes some terms or concepts in embodiments of this application, to facilitate understanding of a person skilled in the art.

Sounding reference signal (sounding reference signal, SRS): The sounding reference signal is a reference signal sent by a UE. In an NR system, a base station can use the SRS to obtain uplink channel information. For a time division duplexing (time division duplexing, TDD) system, channel reciprocity allows the base station to obtain downlink channel information by measuring the SRS. The downlink channel information can then be used for precoding to transmit data to a user.

Cyclic shift (cyclic shift, CS): An SRS resource may be orthogonalized through code division in addition to time division and frequency division. On a same time-frequency resource, different reference signals of different reference signal ports may avoid mutual interference using an orthogonal code division multiplexing scheme, which may be implemented through cyclic shifts. When a delay spread of a channel is small, CS can substantially achieve code division orthogonality. A receiver may perform a specific operation to eliminate signals using other CSs while retaining only a signal with a specific CS, thereby achieving code division multiplexing.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios. For example, the terminal device includes but is not limited to terminal devices in the following scenarios: a sensing scenario, cellular communication, device-to-device (device-to-device, D2D) communication, vehicle to everything (vehicle to everything, V2X), machine-to-machine/machine-type communication (machine-to-machine/-machine-type communication, M2M/MTC), an internet of things (internet of things, IoT), virtual reality (virtual reality, VR), augmented reality (augmented reality, AR), industrial control (industrial control), self driving (self driving), remote medical (remote medical), a smart grid (smart grid), smart furniture, a smart office, a smart wearable, smart transportation, a smart city (smart city), an uncrewed aerial vehicle, a robot, and the like. The terminal device may be sometimes referred to as user equipment (user equipment, UE), a terminal, an access station, a UE station, a remote station, a wireless communication device, a user apparatus, or the like.

In embodiments of this application, a communication apparatus configured to implement a function of the terminal device may be the terminal device, or may be an apparatus, for example, a chip system, that can support the terminal device in implementing the function. The apparatus may be mounted in the terminal device. In the technical solutions provided in embodiments of this application, the technical solutions provided in embodiments of this application are described by using an example in which the apparatus configured to implement the function of the terminal device is the terminal device. In addition, for ease of description, embodiments of this application are described by taking an example where the terminal device is a UE.

A network device in embodiments of this application includes, for example, an access network device and/or a core network device. The access network device is a device having a wireless transceiver function, and is configured to communicate with the terminal device. The access network device includes but is not limited to a base station (a base transceiver station (base transceiver station, BTS), a NodeB (NodeB), an evolved NodeB (evolved NodeB, eNodeB)/eNB, or a next-generation NodeB (the next-generation NodeB, gNodeB)/gNB), a transmission reception point (transmission reception point, TRP), a subsequently evolved base station in the 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller in a cloud radio access network (cloud radio access network, CRAN) scenario, a central unit (centralized unit, CU), and/or a distributed unit (distributed unit, DU). Alternatively, the access network device may be a server or the like. For example, a network device in a V2X technology may be a road side unit (road side unit, RSU). The following uses an example in which the access network device is a base station for description. The base station may communicate with the terminal device, or may communicate with the terminal device via a relay station. The terminal device may communicate with the plurality of base stations in different access technologies. The core network device is configured to implement functions such as mobility management, data processing, session management, and policy and charging. Names of devices that implement core network functions in systems of different access technologies may be different. This is not limited in embodiments this application. A 5th generation (the 5th generation, 5G) mobile communication technology system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be the network device itself, or it may be an apparatus, for example, a chip system, that supports the network device in implementing the function and is installed in the network device. In the technical solutions provided in embodiments of this application, the technical solutions are described by taking an example where the apparatus configured to implement the function of the network device is the network device itself.

The following describes technical characteristics in embodiments of this application.

In LTE and NR, MIMO technology is widely used. To fully realize MIMO performance, a base station needs to obtain an accurate downlink channel, which is used to calculate a precoding vector from the base station to a UE, enabling downlink precoding. For example, for a TDD system, because an uplink and a downlink share a same frequency band, an uplink and a downlink of a radio channel exhibit reciprocity (meaning that an uplink channel and a downlink channel can be considered identical). The base station receives an SRS from the UE and performs channel estimation on the SRS to obtain uplink channel state information (channel state information, CSI). It can be learned from uplink-downlink reciprocity that the CSI may be equivalent to downlink CSI. The base station may then use the CSI to determine a precoding vector, thereby improving signal transmission quality or signal transmission rate.

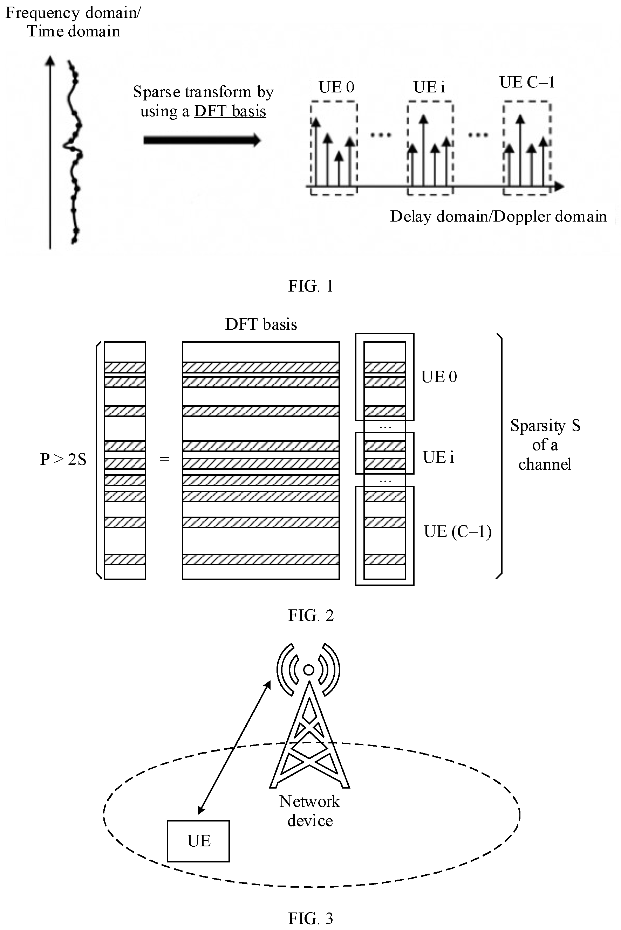

In existing mechanisms, based on channel properties, a DFT basis can be used to transform a frequency domain channel into the delay domain, and/or to transform a time domain channel into the Doppler domain, as illustrated in FIG. 1. In FIG. 1, C UEs indicate C UEs that are multiplexed in the delay domain or Doppler domain, and the right part in FIG. 1 indicates positions of corresponding delay paths or Doppler paths after the C UEs are multiplexed in the delay domain or Doppler domain. Overhead of corresponding reference signals is related to sparsity of a resulting transform domain (delay domain or Doppler domain), specifically, related to a quantity of non-zero elements of a channel in the transform domain. According to a compressed sensing theory, to obtain a channel coefficient through detection, reference signal overhead P must satisfy $P > 2S$, to ensure recovery performance, where S indicates channel sparsity in the transform domain. For example, as shown in FIG. 2, the leftmost side indicates reference signal positions, and the rightmost part indicates, following sampling of the reference signal positions shown on the leftmost side, either actual valid basis entries (entry) after row-wise extraction from the vector group or positions of the C UEs in the delay domain or Doppler domain. FIG. 2 may also be considered as a diagram of reference signal overhead. However, although the channel is relatively sparse in the delay domain/Doppler domain, its actual sparsity remains insufficient, meaning that S may remain relatively large. Under the requirement $P > 2S$, the reference signal overhead P may still be quite high.

To address this, in embodiments of this application, a vector group corresponding to C reference signal ports may be determined based on channel information corresponding to the C reference signal ports. The vector group, for example, may be used for domain transformation on a channel. Because the vector group is determined by considering actual channel information and reflects actual channel characteristics, a channel transformed using the vector group can have low sparsity. This helps reduce reference signal overhead.

The technical solutions provided in embodiments of this application may be applied to a 4th generation mobile communication technology (the 4th generation, 4G) system, for example, an LTE system, or may be applied to a 5G system, for example, an NR system, or may be applied to a next generation mobile communication system or another similar communication system, for example, a 6th generation mobile communication technology (the 6th generation, 6G) system. This is not specifically limited. In addition, the technical solutions provided in embodiments of this application may be applied to a D2D scenario, for example, an NR-D2D scenario, or may be applied to a V2X scenario, for example, an NR-V2X scenario. For example, the technical solutions provided in embodiments of this application may be applied to a field like factory manufacturing, whole-house intelligence, intelligent driving, driving assistance, or an intelligent connected vehicle.

FIG. 3 shows a communication network architecture to which an embodiment of this application is applicable. FIG. 3 includes UE and a network device. When sending downlink data to the UE, the network device may precode the downlink data, to improve data transmission quality or a data transmission rate. The UE and the network device can perform the method provided in embodiments of this application. For example, the network device may precode the downlink data by using the vector group provided in embodiments of this application.

To better describe embodiments of this application, the following describes, with reference to the accompanying drawings, methods provided in embodiments of this application. In embodiments of this application, the vector group may also be referred to as a matrix, an eigenbasis, or the like. A name is not limited. In embodiments of this application, a sub-vector group is included in the vector group, and the sub-vector group may also be referred to as a matrix, a submatrix, an eigenspace, a sub-eigenbasis, or the like. A name is not limited. The reference signal in embodiments of this application may include an uplink reference signal and/or a downlink reference signal. The uplink reference signal includes, for example, an SRS or another reference signal. The downlink reference signal includes, for example, a CSI-reference signal (reference signal, RS), a synchronization signal and physical broadcast channel (physical broadcast channel, PBCH) block (synchronization signal and PBCH block, SSB), or another reference signal. In embodiments of this application, the time-domain unit is, for example, a slot (slot) or an orthogonal frequency division multiplexing (orthogonal frequency division multiplexing, OFDM) symbol (symbol). The frequency-domain unit is, for example, a resource block (resource block, RB) set (set) or a subcarrier. Unless otherwise specified below, in the accompanying drawings corresponding to embodiments of this application, steps represented by dashed lines are all optional steps.

Each method provided in embodiments of this application may be applied to the network architecture shown in FIG. 3. For example, UE in embodiments of this application may be the UE in FIG. 3, and a network device in embodiments of this application may be the network device in FIG. 3.

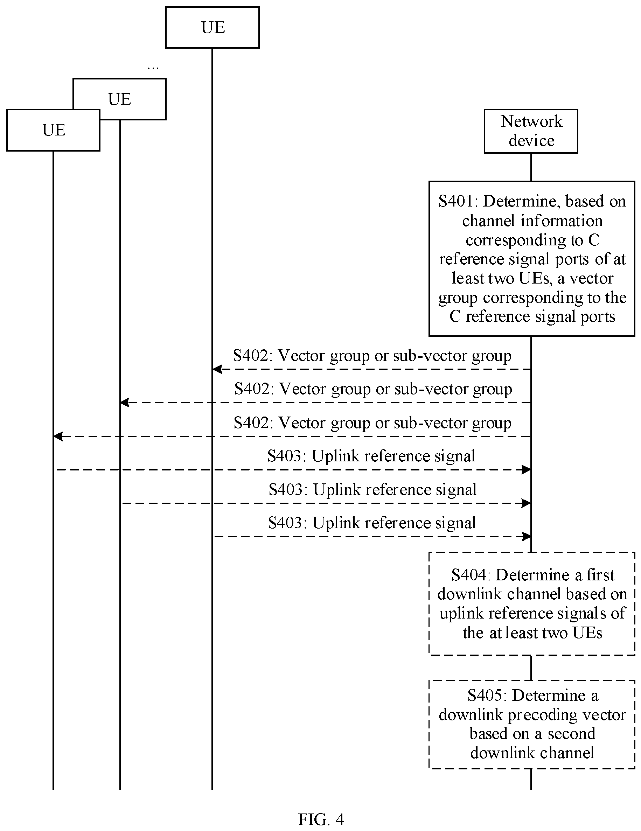

An embodiment of this application provides a communication method. FIG. 4 is a flowchart of the method.

S401: A network device determines, based on channel information corresponding to C reference signal ports of at least two UEs, a vector group corresponding to the C reference signal ports, where C is an integer greater than 1. The at least two UEs are, for example, UEs that are multiplexed in delay domain. Each of the at least two UEs may correspond to at least one of the C reference signal ports, the at least two UEs may correspond to the C reference signal ports in total, different UEs correspond to different reference signal ports, and different UEs correspond to a same quantity of reference signal ports or different quantities of reference signal ports. For example, the reference signal port is an uplink reference signal port, and the uplink reference signal is an SRS. In this case, the reference signal port may be an SRS port.

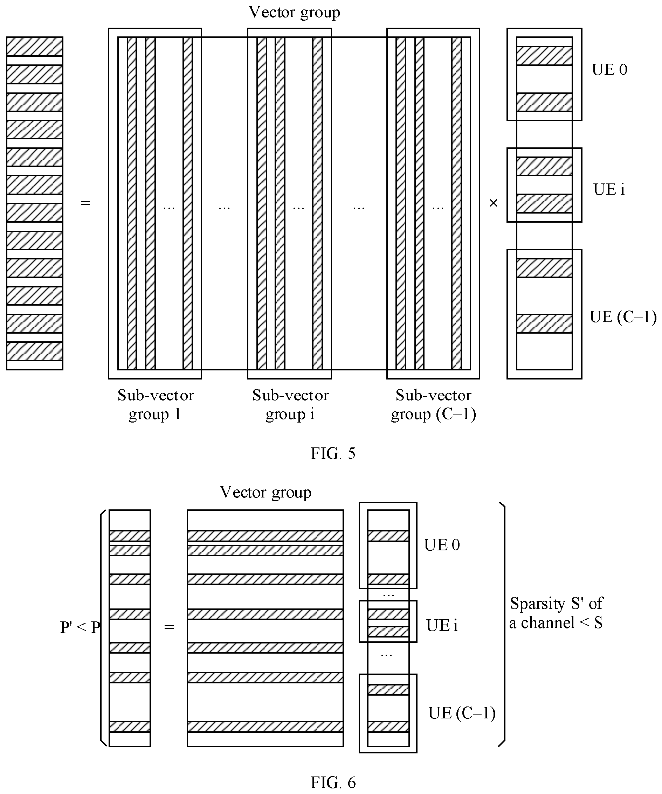

The vector group may be a matrix, and may include C sub-vector groups. Each of the C sub-vector groups may alternatively be a matrix, each sub-vector group may include one or more vectors, and different sub-vector groups may include a same quantity of vectors or different quantities of vectors. The C sub-vector groups may be in one-to-one correspondence with the C reference signal ports. For example, in the C sub-vector groups, sub-vector groups corresponding to different reference signal ports may be the same, for example, a same sub-vector group may correspond to one or more reference signal ports, and in this manner, at least two sub-vector groups in the C sub-vector groups may be same sub-vector groups; or sub-vector groups corresponding to different reference signal ports may be different, and in this manner, every two of the C sub-vector groups may be different. For example, FIG. 5 shows an example of the vector group. A leftmost side in FIG. 5 indicates positions of a reference signal, and a middle part indicates a vector group. The vector group in FIG. 5 may include C sub-vector groups, and the C sub-vector groups are in one-to-one correspondence with C reference signal ports. In FIG. 5, an example in which at least two UEs include C UEs is used, that is, one UE corresponds to one reference signal port. A rightmost side in FIG. 5 indicates positions of paths in an eigenbasis domain corresponding to the C reference signal ports after domain transformation is performed, by using the vector group, on channels corresponding to the C reference signal ports. A domain obtained after domain transformation is performed by using the vector group in this embodiment of this application is, for example, referred to as an eigenbasis domain, or another name.

The vector group may be used to determine at least two first reference signal resource groups, for example, may be used to determine time domain resources and/or frequency domain resources included in the at least two first reference signal resource groups. For example, the time domain resources that can be determined by using the vector group includes a time domain symbol and/or resource mapping, and the frequency domain resources that can be determined by using the vector group includes one or more of the following: a comb (comb) offset, a frequency domain position, a frequency domain symbol, or the like. Optionally, the resource mapping included in the time domain resources may be, for example, used to determine a start time domain position of the time domain resources and/or a quantity of OFDM symbols occupied by the time domain resources. The at least two first reference signal resource groups are in one-to-one correspondence with the at least two UEs. Each first reference signal resource group may include one or more resources used to send an uplink reference signal. The resource that is included in the first reference signal resource group and that is used to send the uplink reference signal is, for example, referred to as a reference signal resource. For example, if the uplink reference signal is an SRS, the reference signal resource may be referred to as an SRS resource. Alternatively, the resource that is included in the first reference signal resource group and that is used to send the uplink reference signal may have another name. In this specification, an example in which a resource included in the first reference signal resource group is referred to as a reference signal resource is used. It may be understood that a reference signal resource included in a first reference signal resource group corresponding to one UE may be used by the UE to send an uplink reference signal. One reference signal resource may include one or more time-domain units or one or more frequency-domain units. Quantities of reference signal resources included in different first reference signal resource groups are the same or different. For example, if one UE corresponds to at least one reference signal port among the C reference signal ports, or the at least one reference signal port belongs to the UE, a reference signal resource included in the first reference signal resource group corresponding to the UE may correspond to the at least one reference signal port. For example, the correspondence may be represented as follows: The UE may send an uplink reference signal on a reference signal resource included in the first reference signal resource group corresponding to the UE and by using the at least one reference signal port. Each of the C reference signal ports may correspond to one reference signal resource in at least two first reference signal resource groups, and the reference signal resource includes one or more time-domain units and/or one or more frequency-domain units.

In this embodiment of this application, the vector group corresponding to the C reference signal ports is determined based on the channel information corresponding to the C reference signal ports. Because the vector group is determined by considering actual channel information and reflects actual channel characteristics, a channel obtained after domain transformation is performed by using the vector group can have low sparsity. The sparsity of the channel is related to the reference signal overhead. Higher sparsity of the channel indicates lower reference signal overhead. For example, the first reference signal resource group includes fewer reference signal resources. This helps reduce reference signal overhead. FIG. 6 is a diagram of reference signal overhead. Sparsity of a channel B obtained after the domain transformation is performed on the channel A by using the vector group provided in this embodiment of this application is, for example, represented by S', and the sparsity is less than sparsity S of a channel C obtained after the domain transformation is performed on the channel A by using a DFT basis. Therefore, the reference signal overhead (represented by P') required in this embodiment of this application is also less than reference signal overhead P corresponding to domain transformation performed by using the DFT basis.

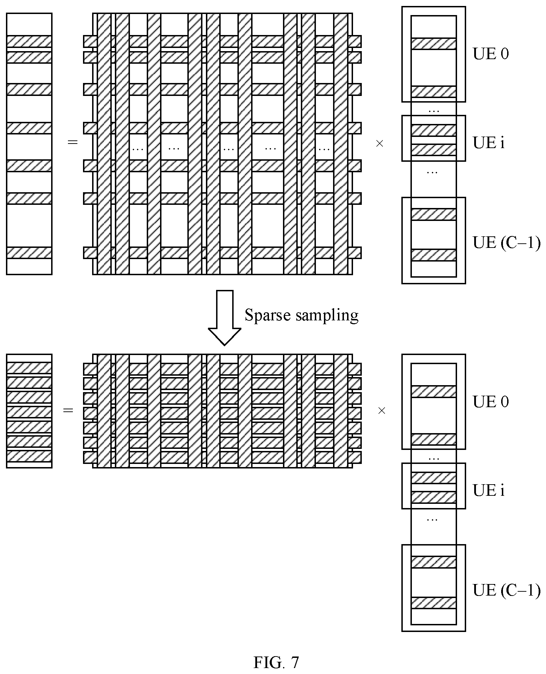

FIG. 7 is a diagram of a domain transformation process according to an embodiment of this application. Using the vector group provided in this embodiment of this application, a channel may be transformed into an eigenspace domain corresponding to the vector group, where different reference signal ports do not overlap. FIG. 7 assumes, by way of example, that the at least two UEs include C UEs. In FIG. 7, vertically shaded boxes within the central rectangle indicate sub-vectors in the vector group, and horizontally shaded boxes in the central rectangle indicate row-wise extraction performed on the vector group based on sparse observation (positions of sparse reference signals).

In addition to the first reference signal resource group, in this embodiment of this application, there is another manner for grouping time-domain units or frequency-domain units. For example, each of the C reference signal ports may correspond to Q1 time-domain units and one or more frequency-domain units, where Q1 is a positive integer less than or equal to $\frac{N1}{C}$, N1 is a maximum possible total quantity of time-domain units corresponding to the C reference signal ports, the total quantity of time-domain units corresponding to the C reference signal ports may be less than or equal to N1, and N1 is a positive integer. A first quantity of resource groups may be obtained from all time-domain units (up to N1 units) corresponding to the C reference signal ports. For example, all the time-domain units (up to N1 units) corresponding to the C reference signal ports are divided to form the first quantity of resource groups, where the first quantity is, for example,

$$\frac{total\ quantity\ of\ time-domain\ units\ corresponding\ to\ C\ reference\ signal\ ports}{C}$$

. . In the case where the C reference signal ports correspond to N1 time-domain units, the first quantity is $\frac{N1}{C}$ .

Within each of part or all of the resource groups of the first quantity of resource groups, time-domain units may include C1 time-domain units, where C1 is less than or equal to C. These C1 time-domain units may be in one-to-one correspondence with the C1 reference signal ports, which are part or all of the C reference signal ports. For example, if the UE sends an uplink reference signal by using a time-domain unit A in the C1 time-domain units, the uplink reference signal may be used to determine a channel of a reference signal port that is among the C reference signal ports and that corresponds to the time-domain unit A. Different resource groups may contain the same or different quantities of time-domain units, or it is understood that they may correspond to the same or different reference signal ports. In other words, each of part or all of the resource groups of the first quantity of resource groups includes C1 time-domain units, but values of C1 may be the same or different across resource groups. For example, a resource group 1 in the first quantity of resource groups includes C1 time-domain units, where C1=2; a resource group 2 in the first quantity of resource groups includes C1 time-domain units, where C1=3. If two resource groups share the same C1 value, they may correspond to identical, partially overlapping, or entirely different reference signal ports. For example, a resource group 1 in the first quantity of resource groups includes C1 time-domain units, C1=2, and the two reference signal ports are reference signal ports A and B; a resource group 2 in the first quantity of resource groups includes C1 time-domain units, C1=2, and the two reference signal ports are reference signal ports A and B, reference signal ports A and C, or reference signal ports C and D.

For time-domain units included in different resource groups in the first quantity of resource groups, relative positions of time-domain units corresponding to a same reference signal port may be the same or different across their respective resource groups. For example, consider a time-domain unit A included in the resource group 1 in the first quantity of resource groups, which has a time-domain offset a from the start of the resource group 1 and corresponds to, for example, the reference signal port A among the C reference signal ports; a time-domain unit D included in the resource group 2 in the first quantity of resource groups, which has a time-domain offset d from the start of the resource group 2 and also corresponds to the reference signal port A, where a and d may be equal or different.

Alternatively, for example, each of the C reference signal ports may correspond to Q2 frequency-domain units and one or more time-domain units, where Q2 is a positive integer less than or equal to $\frac{N2}{C}$ , N2 is a maximum possible total quantity of frequency-domain units corresponding to the C reference signal ports, the total quantity of frequency-domain units corresponding to the C reference signal ports may be less than or equal to N2, and N2 is a positive integer. A first quantity of resource groups may be obtained from all frequency-domain units (up to N2 units) corresponding to the C reference signal ports. For example, all the frequency-domain units (up to N2 units) corresponding to the C reference signal ports are divided to form the first quantity of resource groups, where the first quantity is, for example,

$$\frac{total\ quantity\ of\ frequency-domain\ units\ corresponding\ to\ C\ reference\ signal\ ports}{C}$$ . In the case where C reference signal ports correspond to N2 frequency-domain units, the first quantity is $\frac{N2}{C}$ .

Within each of part or all of the resource groups of the first quantity of resource groups, frequency-domain units may include C2 frequency-domain units, where C2 is less than or equal to C. These C2 frequency-domain units may be in one-to-one correspondence with the C2 reference signal ports, which are part or all of the C reference signal ports. For example, if the UE sends an uplink reference signal by using a frequency-domain unit B in the C2 frequency-domain units, the uplink reference signal may be used to determine a channel of a reference signal port that is among the C reference signal ports and that corresponds to the frequency-domain unit B. Different resource groups may contain the same or different quantities of frequency-domain units, or it is understood that they may correspond to the same or different reference signal ports. In other words, each of part or all of the resource groups of the first quantity of resource groups includes C2 frequency-domain units, but values of C2 may be the same or different across resource groups. For example, a resource group 1 in the first quantity of resource groups includes C2 frequency-domain units, where C2=2; a resource group 2 in the first quantity of resource groups includes C2 frequency-domain units, where C2=3. If two resource groups share the same C2 value, they may correspond to identical, partially overlapping, or entirely different reference signal ports. For example, a resource group 1 in the first quantity of resource groups includes C2 frequency-domain units, C2=2, and the two reference signal ports are reference signal ports A and B; a resource group 2 in the first quantity of resource groups includes C2 frequency-domain units, C2=2, and the two reference signal ports are reference signal ports A and B, reference signal ports A and C, or reference signal ports C and D.

C1 and C2 may be equal or different, and N1 and N2 may be equal or different.

For frequency-domain units included in different frequency resource groups in the first quantity of resource groups, relative positions of frequency-domain units corresponding to a same reference signal port may be the same or different across their respective resource groups. For example, consider a frequency-domain unit E included in a resource group 3 in the first quantity of resource groups, which has a frequency-domain offset e from the start of the resource group 3 and corresponds to, for example, a reference signal port B among the C reference signal ports; a frequency-domain unit F included in a resource group 4 in the first quantity of resource groups, which has a frequency-domain offset f from the start of the resource group 2 and also corresponds to the reference signal port B, where e and f may be equal or different.

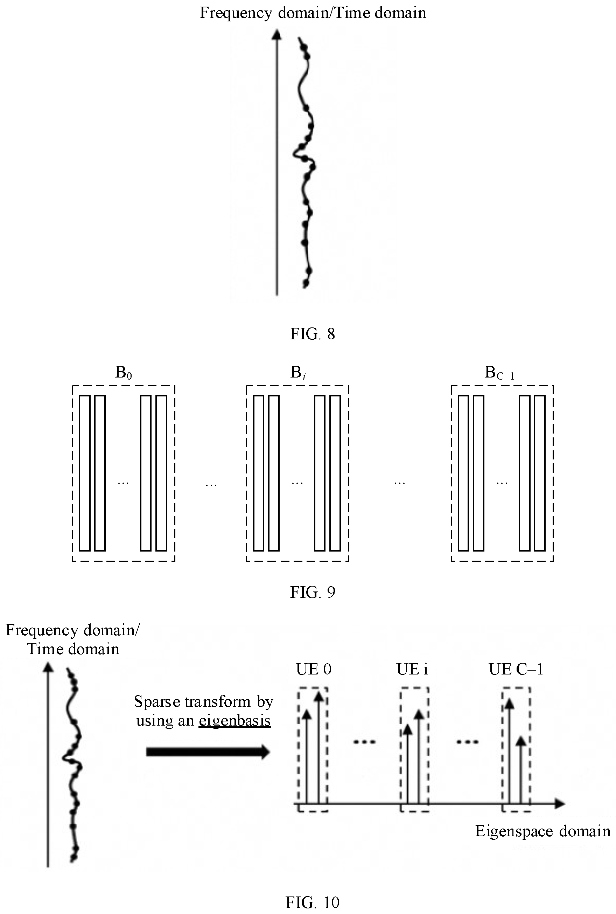

FIG. 8 shows an example of the N1 time-domain units or the N2 frequency-domain units. Each dot in FIG. 8 indicates one of the N1 time-domain units, or indicates one of the N2 frequency-domain units. For example, FIG. 8 shows an example of the N1 time-domain units, and the N1 time-domain units may be grouped into the first quantity of resource groups. Alternatively, FIG. 8 shows an example of the N2 frequency-domain units, and the N2 frequency-domain units may be grouped into the first quantity of resource groups. C1 time-domain units in time-domain units included in each of part or all of the first quantity of resource groups correspond to C1 reference signal ports; or C2 frequency-domain units in frequency-domain units included in each of part or all of the first quantity of resource groups correspond to C2 reference signal ports.

A manner in which the network device determines, based on the channel information corresponding to the C reference signal ports of the at least two UEs, the vector group corresponding to the C reference signal ports includes: For example, the network device, a first sub-vector group in the vector group based on the channel information corresponding to the C reference signal ports. Because the first sub-vector group is determined based on the channel information corresponding to the C reference signal ports, the first sub-vector group may be considered as a common eigenspace of the C reference signal ports. For example, the vector group is represented by B, an $i^{th}$ sub-vector group in the vector group B is represented as $B_i$, and the first sub-vector group is, for example, a first sub-vector group in the vector group B, represented as $B_0$. After $B_0$ is determined, $B_i$ may be determined based on $B_0$ and based on the cyclic shift index corresponding to the $i^{th}$ sub-vector group $B_i$. $i$ $B_i$ may not be 0, or it may be understood that a sub-vector group other than $B_0$ in the vector group B may be determined based on $B_0$. $B_i$ may correspond to an $(i+1)^{th}$ reference signal port among the C reference signal ports.

The following uses an example to describe a manner in which the network device determines the first sub-vector group.

For example, each of the C reference signal ports may correspond to Q2 frequency-domain units. Channel information corresponding to each of the C reference signal ports may correspond to one channel matrix. In this case, the C reference signal ports correspond to C channel matrices. For example, a channel matrix corresponding to a reference signal port j among the C reference signal ports is represented as $H_j$, dimensions of $H_j$ are Q2×M, and M=$T_x$ × T. Q2 indicates the Q2 frequency-domain units, $T_x$ indicates a quantity of all ports of the network device, and T indicates a quantity of time-domain units corresponding to each of the C channel matrices. It may be understood that each column in $H_j$ corresponds to one of the T time-domain units and corresponds to one of the $T_x$ ports of the network device; or each column in $H_j$ corresponds to one of the T time-domain units, and corresponds to a frequency domain channel in a beam direction corresponding to one of the $T_x$ ports after a channel matrix corresponding to the reference signal port j is transformed from an antenna port domain to a beam direction domain; or each column in $H_j$ corresponds to a Doppler shift corresponding to one of the T time-domain units, and corresponds to one of the $T_x$ ports of the network device; or each column in $H_j$ corresponds to a Doppler shift corresponding to one of the T time-domain units, and corresponds to a frequency domain channel in a beam direction corresponding to one of the $T_x$ ports after the channel matrix corresponding to the reference signal port j is transformed from an antenna port domain to a beam direction domain.

Alternatively, each of the C reference signal ports may correspond to Q1 time-domain units. Each of the C reference signal ports may correspond to one channel, or correspond to one channel matrix. In this case, the C reference signal ports correspond to C channel matrices. For example, a channel matrix corresponding to a reference signal port j among the C reference signal ports is represented as $H_j$, dimensions of $H_j$ are Q1×M, and M=$T_x$ × W. Q1 indicates the Q1 time-domain units, $T_x$ indicates a quantity of all ports of the network device, and W indicates a quantity of frequency-domain units corresponding to each of the C channel matrices. It may be understood that each column in $H_j$ corresponds to one of the W frequency-domain units W and corresponds to one of the $T_x$ ports of the network device; or each column in $H_j$ corresponds to one of the W frequency-domain units W, and corresponds to a time domain channel in a beam direction corresponding to one of the $T_x$ ports after a channel matrix corresponding to the reference signal port j is transformed from an antenna port domain to a beam direction domain; or each column in $H_j$ corresponds to a delay path corresponding to one of the W frequency-domain units after a channel matrix corresponding to the reference signal port j is transformed from frequency domain to delay domain, and corresponds to one of the $T_x$ ports of the network device; or each column in $H_j$ corresponds to a delay path corresponding to one of the W frequency-domain units after a channel matrix corresponding to the reference signal port j is transformed from frequency domain to delay domain, and corresponds to a time domain channel in a beam direction corresponding to one of the $T_x$ ports after the channel matrix corresponding to the reference signal port j is transformed from an antenna port domain to a beam direction domain.

The network device may concatenate C channel matrices corresponding to the C reference signal ports, to obtain a joint channel matrix H. H = [$H_0$, $H_1$, ..., $H_i$, ..., $H_{C-1}$]. A dimension of the joint channel matrix is Q×MC, where Q=Q1 or Q=Q2. The network device may determine an autocorrelation matrix R of the joint channel matrix H, where R=HH$^H$, and H$^H$ indicates a transpose matrix of H. After obtaining R, the network device may perform eigen-decomposition on R, for example, perform singular value decomposition (singular value decomposition, SVD), to determine the first sub-vector group $B_0$. For example, after performing eigen-decomposition on R, the network device may obtain a plurality of eigenvectors, where each eigenvector may correspond to one eigenvalue. The network device may select, in descending order of eigenvalues, L eigenvectors corresponding to the first L eigenvalues as vectors included in the first sub-vector group $B_0$. Therefore, $B_0$ is determined. $B_0$ = {$v_0$, $v_1$, ..., $v_{L-1}$}, where $v_x$ indicates an $x^{th}$ vector in $B_0$. L is a positive integer. For example, L may be less than or equal to $\frac{Q}{C}$. Optionally, $B_0$ may meet the following relationship:

$$B_0 \in span(d_0, ..., d_{\frac{Q}{C}-1}), \ d_k = \frac{1}{\sqrt{Q}}[e^{j\frac{2\pi}{Q}*k*0}, ..., e^{j\frac{2\pi}{Q}*k*(Q-1)}]^T \ (formula \ 1)$$

$span(d_0, ..., d_{Q/C-1})$ indicates the Span of $d_0, ..., d_{Q/C-1}$. In this embodiment of this application, both "×" and "*" indicate a multiplication operation. "×" and "*" may indicate a same operation manner, and may be replaced with each other.

After determining $B_0$, the network device may determine the $i^{th}$ vector group $B_i$ in the vector groups based on $B_0$. In this embodiment of this application, the at least two UEs may correspond to the at least two first reference signal resource groups, and the at least two first reference signal resource groups may correspond to C cyclic shift indexes. Therefore, the at least two terminal devices may correspond to the C cyclic shift indexes. Each first reference signal resource group (or each UE) may correspond to one or more cyclic shift indexes in the C cyclic shift indexes, and different first reference signal resource groups may correspond to different cyclic shift indexes; or cyclic shift indexes that correspond to first reference signal resource groups corresponding to different UEs and that are in the C cyclic shift indexes may be different. The C cyclic shift indexes may be in one-to-one correspondence with the C sub-vector groups. For example, the network device may determine $B_i$ based on $B_0$ and based on a cyclic shift index (for example, represented as $c_i$) corresponding to the $i^{th}$ vector group $B_i$: as that the network device performs cyclic shift migration based on $B_0$, so that the reference signal ports corresponding to C different cyclic shift indexes are separated without overlapping.

The network device may determine $B_i$ based on $B_0$ and based on the cyclic shift index $c_i$ corresponding to the $i^{th}$ vector group $B_i$: device determines the $l^{th}$ vector $b_i^l$ in $B_i$ based on the $l^{th}$ vector $b_0^l$ in $B_0$ and based on the cyclic shift index $c_i$ corresponding to $B_i$. $B_i$ is obtained. i=1, 2, ..., (C-1). l=0, 1, ..., L-1. For example, the relationship may be expressed as:

$$b_i^l = b_0^l \odot c_i \quad (\text{formula 2})$$

$\odot$ indicates a dot product operation. FIG. 9 is a diagram of a vector group B. It may be considered that the sub-vector group like $B_i$ is obtained after $B_0$ is shifted based on a cyclic shift index.

After determining the vector group, the network device may indicate the vector group to the UE, or indicate a sub-vector group in the vector group. Optionally, the method further includes S402: The network device indicates the vector group or the sub-vector group. Alternatively, S402 may be understood as that the network device sends third information, and the third information may indicate the vector group or the sub-vector group. The network device may send the third information in a manner such as unicast, broadcast, or multicast (for example, the at least two UEs belong to one multicast group). If one of the at least two UEs receives the third information or receives an indication from the network device, the UE may determine the vector group or determine a sub-vector group in the vector group.

For example, if the network device sends the third information in a unicast manner, the network device may separately send the third information to each of the at least two UEs. The third information sent to each UE may indicate the vector group. Alternatively, the third information sent to each UE may indicate $B_0$, and may indicate a manner of determining $B_i$ based on $B_0$ (that is, determining at least one other sub-vector groups in the vector group), for example, indicate the foregoing formula 2. In this case, each UE may autonomously determine all sub-vector groups in the vector group based on the third information, to determine the vector group. Alternatively, because the C sub-vector groups included in the vector group are in one-to-one correspondence with the C reference signal ports, each sub-vector group in the vector group may correspond to one UE. Therefore, the third information sent by the network device to UE only needs to indicate a sub-vector group corresponding to the UE, and does not need to indicate other sub-vector groups. For example, third information sent to first UE in the at least two UEs may indicate a sub-vector group corresponding to the first UE in the vector group, and third information sent to second UE in the at least two UEs may indicate a sub-vector group corresponding to the second UE in the vector group. The rest can be deduced by analogy. In this case, one UE in the at least two UEs may determine a sub-vector group corresponding to the UE, and may not determine another sub-vector group.

For another example, if the network device sends the third information in a multicast or broadcast manner, the network device may broadcast the third information. In this case, the third information may indicate the vector group, or indicate $B_0$, and indicate a manner of determining $B_i$ based on $B_0$. In a multicast or broadcast manner, each of the at least two UEs may determine the vector group.

If the network device needs to determine, based on the channel information corresponding to the C reference signal ports of the at least two UEs, the vector group corresponding to the C reference signal ports, the network device first needs to obtain the channel information corresponding to the C reference signal ports. For example, a manner in which the network device obtains the channel information corresponding to the C reference signal ports includes: The network device determines, based on the at least two second reference signal resource groups corresponding to the at least two UEs, the channel information corresponding to the C reference signal ports.

To determine the vector group, the network device first needs to obtain the channel information corresponding to the C reference signal ports. Channel information corresponding to one reference signal port is, for example, a channel matrix corresponding to the reference signal port. Optionally, the network device may obtain the channel information corresponding to the C reference signal ports. In an optional implementation, the channel information corresponding to the C reference signal ports may be determined based on an uplink reference signal, or the channel information corresponding to the C reference signal ports may be determined based on at least two second reference signal resource groups corresponding to the at least two UEs, and the at least two second reference signal resource groups may be in one-to-one correspondence with the at least two UEs. Each second reference signal resource group may include one or more resources used to send an uplink reference signal. The resource that is included in the second reference signal resource group and that is used to send the uplink reference signal is, for example, referred to as a reference signal resource. For example, if the uplink reference signal is an SRS, the reference signal resource may be referred to as an SRS resource. It may be understood that a reference signal resource included in a second reference signal resource group corresponding to one UE may be used by the UE to send an uplink reference signal. One reference signal resource may include one time-domain unit or one frequency-domain unit. Each of the at least two UEs may send, on a reference signal resource in the second reference signal resource group corresponding to the UE, an uplink reference signal to the network device through a reference signal port (belonging to the C reference signal ports) corresponding to the UE. After receiving the uplink reference signals from the C reference signal ports, the network device may determine, based on the received uplink reference signals, the channel information corresponding to the C reference signal ports. For example, the network device may measure uplink reference signals from C reference signal ports, and may determine, based on a measurement result, channel information corresponding to the C reference signal ports. Therefore, it may also be considered that the channel information of the C reference signal ports is determined based on the measurement result. The channel information determined by the network device is uplink channel information. Based on reciprocity between uplink and downlink channels, the network device may use the uplink channel information as the downlink channel information corresponding to the C reference signal ports. Optionally, a quantity of reference signal resources included in the second reference signal resource group corresponding to the UE may be greater than a quantity of reference signal resources included in the first reference signal resource group corresponding to the UE. For example, the UE may send the uplink reference signal to the network device on a large quantity of reference signal resources, so that the channel information of the C reference signal ports determined by the network device can be more accurate.

Alternatively, in an optional implementation, the channel information corresponding to the C reference signal ports may be determined based on a parameter from the UE. The parameter from the UE is, for example, channel information or information indicating channel information. For example, each of the at least two UEs may determine channel information corresponding to reference signal ports (belonging to the C reference signal ports) of the UE, and each of the at least two UEs may send the channel information determined by the UE to the network device. In this case, the network device may receive the channel information from the at least two UEs, that is, channel information of the C reference signal ports is received. Alternatively, the at least two UEs may exchange channel information with each other. For example, UE other than the first UE in the at least two UEs sends channel information determined by the UE to the first UE (for example, sent through a sidelink (sidelink, SL)). In this case, the first UE may send the channel information of the at least two UEs to the network device, and the network device may receive the channel information from the at least two UEs, that is, receive the channel information of the C reference signal ports.

Optionally, the method may further include S403 to S405. S403 includes: Each of the at least two UEs sends an uplink reference signal to the network device through a reference signal port (belonging to the C reference signal ports) of the UE by using a first reference signal resource group corresponding to the UE. Correspondingly, the network device receives uplink reference signals from the at least two UEs, and the uplink reference signals of the at least two UEs may correspond to the C reference signal ports. Optionally, the network device may determine at least two first reference signal resource groups based on the vector group, and the network device may send information to each of the at least two UEs, to indicate a first reference signal resource group corresponding to the UE, therefore, each of the at least two UEs may send a reference signal to the network device by using the first reference signal resource group corresponding to the UE. Alternatively, each of the at least two UEs may autonomously determine the first reference signal resource group, so that the first reference signal resource group does not need to be indicated by the network device.

If the UE determines the first reference signal resource group, each of the at least two UEs may send information to the network device, to indicate the first reference signal resource group corresponding to the UE. Alternatively, the first UE may send information to the network device to indicate the at least two first reference signal resource groups, and the first UE is, for example, one of the at least two UEs. For example, each of UE other than the first UE in the at least two UEs may determine, based on a sub-vector group corresponding to the UE or based on the vector group, a first reference signal resource group corresponding to the UE, and send information about the first reference signal resource group corresponding to the UE to the first UE, so that the first UE can determine the at least two first reference signal resource groups. Alternatively, UE other than the first UE in the at least two UEs may send the sub-vector group corresponding to the UE to the first UE, so that the first UE can obtain the vector group, to determine the at least two reference signal resource groups based on the vector group.

S404 includes: The network device determines a first downlink channel based on the uplink reference signals of the at least two UEs. After receiving the uplink reference signals from the at least two UEs, the network device may determine, based on the received uplink reference signals, an uplink channel corresponding to the C reference signal ports. For example, the network device may measure the uplink reference signals from the at least two UEs, and may determine, based on a measurement result, the uplink channel corresponding to the C reference signal ports. Based on reciprocity between uplink and downlink channels, the network device may use the uplink channel as a downlink channel corresponding to the C reference signal ports, for example, referred to as the first downlink channel.

S405 includes: The network device determines a downlink precoding vector based on a second downlink channel, where the second downlink channel is determined based on the first downlink channel and the vector group. After determining the first downlink channel, the network device may perform domain transformation on the first downlink channel by using the vector group, to obtain the second downlink channel. For example, after obtaining the second downlink channel, the network device may determine the downlink precoding vector based on the second downlink channel, or may perform another processing process by using the second downlink channel. This is not limited. For example, FIG. 10 is a diagram of performing domain transformation on the first downlink channel by using the vector group. It can be learned from FIG. 10 that, based on the vector group, the first downlink channel may be transformed into an eigenspace domain corresponding to the vector group, and reference signal ports of at least two UEs (C UEs are used as an example in FIG. 10) do not overlap in the eigenspace domain.

In this embodiment of this application, the vector group corresponding to the C reference signal ports is determined based on the channel information corresponding to the C reference signal ports. Because the vector group is determined by considering actual channel information and reflects actual channel characteristics, a channel (the second downlink channel) obtained after domain transformation is performed by using the vector group can have low sparsity. The sparsity of the channel is related to the reference signal overhead. Higher sparsity of the channel indicates lower reference signal overhead. This helps reduce reference signal overhead.

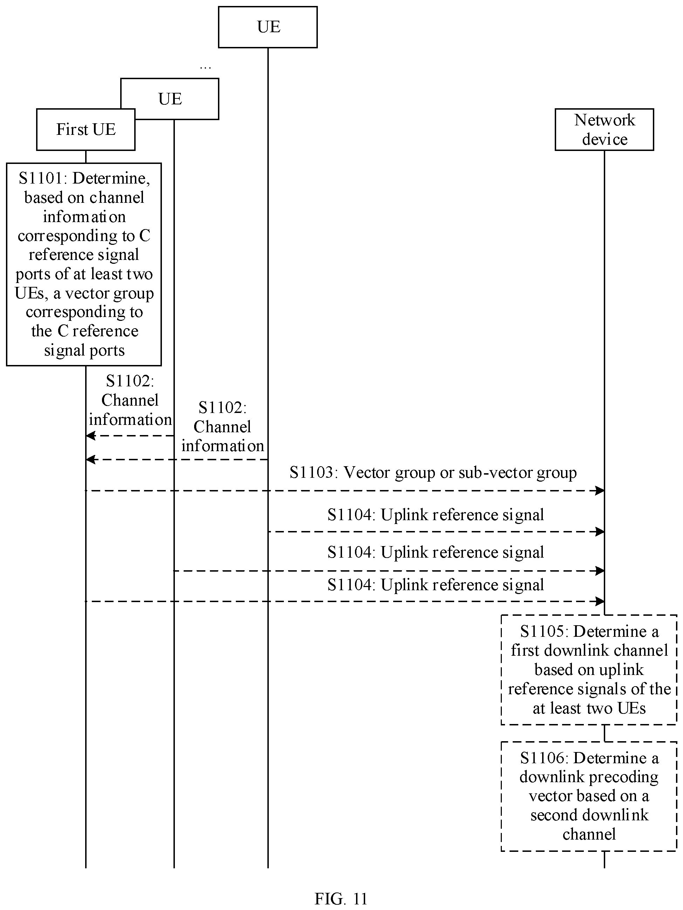

In the embodiment shown in FIG. 4, the network device determines the vector group. In addition, the UE may alternatively determine the vector group. FIG. 11 is a flowchart of another communication method according to an embodiment of this application. In the method, UE determines a vector group.

S1101: First UE determines, based on channel information corresponding to C reference signal ports of at least two UEs, a vector group corresponding to the C reference signal ports, where C is an integer greater than 1. The at least two UEs are, for example, UEs that are multiplexed in delay domain, and the first UE is, for example, one of the at least two UEs. Alternatively, the first UE may be UE that does not belong to the at least two UEs. For example, the first UE is UE configured to determine the channel information of the at least two UEs. In this embodiment of this application, an example in which the first UE is one of the at least two UEs is used. Each of the at least two UEs may correspond to at least one of the C reference signal ports, the at least two UEs may correspond to the C reference signal ports in total, different UEs correspond to different reference signal ports, and different UEs correspond to a same quantity of reference signal ports or different quantities of reference signal ports. For example, the reference signal port is an uplink reference signal port, and the uplink reference signal is an SRS. In this case, the reference signal port may be an SRS port.

Optionally, the method may further include S1102: UE other than the first UE in the at least two UEs sends the channel information to the first UE, and correspondingly, the first UE receives channel information from the other UE. For example, information is transmitted between UEs through a sidelink (sidelink, SL). For example, each UE in UE other than the first UE in the at least two UEs may determine channel information of a reference signal port (belonging to the C reference signal ports) of the UE, and each UE may send the determined channel information to the first UE. Optionally, each UE may receive a downlink reference signal from a network device through a reference signal port of the UE, and may determine, by measuring the downlink reference signal, the channel information corresponding to the reference signal port of the UE. In addition, the first UE may also determine the channel information of the reference signal port of the first UE. For example, the first UE may receive a downlink reference signal from the network device through the reference signal port of the first UE, and may determine, by measuring the downlink reference signal, the channel information corresponding to the reference signal port of the first UE. In this way, the first UE obtains the channel information corresponding to the C reference signal ports.

For descriptions of content such as the vector group, the first reference signal resource group, the resource group, and how the first UE determines the vector group, refer to related content in S401 in the embodiment shown in FIG. 4.

Optionally, the method further includes S1103: The first UE indicates the vector group or a sub-vector group to the network device. If the first UE indicates the vector group to the network device, S1103 may also be understood as that the first UE sends first information to the network device, where the first information may indicate the vector group. Alternatively, if the first UE indicates the sub-vector group to the network device, S1103 may also be understood as that the first UE sends second information to the network device, where the second information may indicate the sub-vector group. After receiving the first information or the second information, or receiving an indication from the first UE, the network device may determine the vector group, or determine the sub-vector group in the vector group. In addition, optionally, after determining the vector group, the first UE may also indicate the vector group to each UE in UE other than the first UE in the at least two UEs, or indicate a sub-vector group that is in the vector group and that corresponds to each UE.

Optionally, if the first UE indicates the sub-vector group to the network device, an indication manner is that the first UE indicates $B_0$ to the network device, and indicates a manner of determining $B_i$ based on $B_0$. After receiving the indication from the first UE, the network device can determine $B_0$, and can further determine $B_i$ based on $B_0$, so that the network device obtains the vector group.

Alternatively, another indication manner in which the first UE indicates the sub-vector group to the network device is that the first UE indicates, to the network device, a sub-vector group that is in the vector group and that corresponds to the reference signal port of the first UE. If this indication manner is used, optionally, the network device may determine, based on the sub-vector group corresponding to the reference signal port of the first UE, a sub-vector group corresponding to a reference signal port of the UE other than the first UE in the at least two UEs, to determine the vector group. Alternatively, each UE in UE other than the first UE in the at least two UEs may indicate, to the network device, the sub-vector group corresponding to the reference signal port of the UE, so that the network device can obtain the vector group.

The first UE sends the first information to the network device to indicate the vector group. A manner is that the first information is the vector group. For example, the first UE does not perform other processing on the vector group, and may directly send the vector group to the network device. Alternatively, another manner in which the first UE sends the first information to the network device to indicate the vector group is that the first information may include indexes (index) of candidate values corresponding to part or all of elements in the vector group, the part or all of elements may belong to part or all of vectors included in the vector group, and the part or all of vectors belong to part or all of sub-vector groups included in the vector group. Candidate values corresponding to the part or all of elements may be included in at least one candidate value set. The candidate value set may also be referred to as a dictionary, or may have another name. This is not limited. The at least one candidate value set includes, for example, one or more of the following: a candidate value set corresponding to an amplitude of an element, where the candidate value set includes a plurality of different candidate values, and each candidate value corresponds to one index; or a candidate value set corresponding to a phase of an element, where the candidate value set includes a plurality of different candidate values, and each candidate value corresponds to one index; or a candidate value set corresponding to a real part of an element, where the candidate value set includes a plurality of different candidate values, and each candidate value corresponds to one index; or a candidate value set corresponding to an imaginary part of an element, where the candidate value set includes a plurality of different candidate values, and each candidate value corresponds to one index; or a candidate value set corresponding to a real part and an imaginary part of an element, where the candidate value set includes a plurality of different candidate values, and each candidate value corresponds to one index.

Obtaining the first information by using the candidate value set may be understood as quantizing the vector group. For example, for an element in the vector group, the first UE may separately determine, from one or more candidate value sets, a candidate value with a highest similarity to the element, and the first information may include an index of the candidate value. For example, in this embodiment of this application, the vector group is quantized by using a candidate value set A corresponding to an amplitude of an element and a candidate value set B corresponding to a phase of an element. For an element A in the vector group, the first UE may determine, from the candidate value set A, a candidate value a with a highest amplitude similarity to the element A, and determine an index a corresponding to the candidate value a. In addition, the first UE may determine, from the candidate value set B, a candidate value b with a highest phase similarity to the element A, and determine an index b corresponding to the candidate value b. In this case, the first information may include the index a and the index b that correspond to the element A. For another example, in this embodiment of this application, the vector group may alternatively be quantized by using a candidate value set C corresponding to a real part of an element and a candidate value set D corresponding to an imaginary part of the element. For the element A in the vector group, the first UE may determine, from the candidate value set C, a candidate value c with a highest amplitude similarity to the element A, and determine an index c corresponding to the candidate value c. In addition, the first UE may determine, from the candidate value set D, a candidate value d with a highest phase similarity to the element A, and determine an index d corresponding to the candidate value d. In this case, the first information may include the index c and the index d that correspond to the element A.

The first UE sends the second information to the network device to indicate a sub-vector group. A manner is that the second information is the sub-vector group. For example, the first UE does not perform other processing on the sub-vector group, and may directly send the sub-vector group to the network device. Alternatively, another manner in which the first UE sends the second information to the network device to indicate the sub-vector group is that the second information may include indexes of candidate values corresponding to part or all of elements in the sub-vector group, and the part or all of elements may belong to part or all of vectors included in the sub-vector group. Candidate values corresponding to the part or all of elements may be included in at least one candidate value set. For descriptions of the at least one candidate value set, refer to the foregoing descriptions.

Optionally, the method may further include S1104 to S1106. S1104 includes: Each of the at least two UEs sends an uplink reference signal to the network device through a reference signal port (belonging to the C reference signal ports) of the UE by using a first reference signal resource group corresponding to the UE. Correspondingly, the network device receives uplink reference signals from the at least two UEs, and the uplink reference signals of the at least two UEs may correspond to the C reference signal ports.

S1105 includes: The network device determines a first downlink channel based on the uplink reference signals of the at least two UEs. After receiving the uplink reference signals from the at least two UEs, the network device may determine, based on the received uplink reference signals, an uplink channel corresponding to the C reference signal ports. For example, the network device may measure the uplink reference signals from the at least two UEs, and may determine, based on a measurement result, the uplink channel corresponding to the C reference signal ports. Based on reciprocity between uplink and downlink channels, the network device may use the uplink channel as a downlink channel corresponding to the C reference signal ports, for example, referred to as the first downlink channel.

S1106 includes: The network device determines a downlink precoding vector based on a second downlink channel, where the second downlink channel is determined based on the first downlink channel and the vector group. After determining the first downlink channel, the network device may perform domain transformation on the first downlink channel by using the vector group, to obtain the second downlink channel. For example, after obtaining the second downlink channel, the network device may determine the downlink precoding vector based on the second downlink channel, or may perform another processing process by using the second downlink channel. This is not limited.

In this embodiment of this application, the vector group corresponding to the C reference signal ports is determined based on the channel information corresponding to the C reference signal ports. Because the vector group is determined by considering actual channel information and reflects actual channel characteristics, a channel (the second downlink channel) obtained after domain transformation is performed by using the vector group can have low sparsity. The sparsity of the channel is related to the reference signal overhead. Higher sparsity of the channel indicates lower reference signal overhead. This helps reduce reference signal overhead.

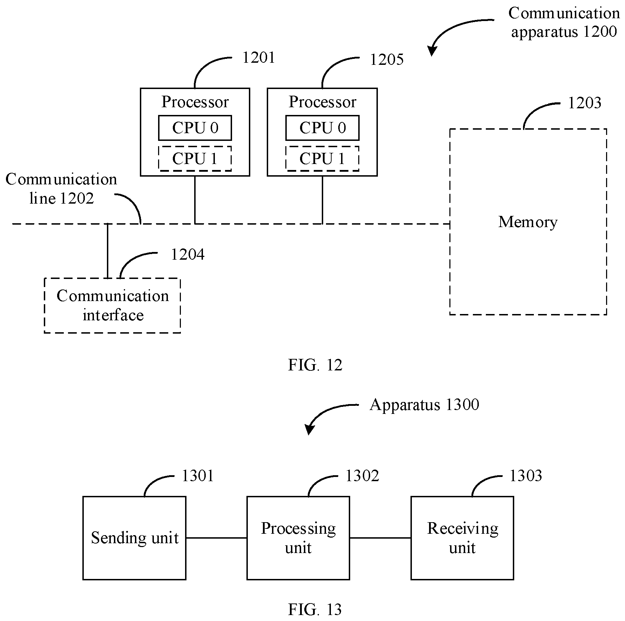

FIG. 12 is a diagram of a structure of a communication apparatus according to an embodiment of this application. The communication apparatus 1200 may be the UE or a circuit system of the UE in the embodiment shown in any one of FIG. 4 or FIG. 11, and is configured to implement the method corresponding to the UE in the foregoing method embodiments. The UE is, for example, first UE. Alternatively, the communication apparatus 1200 may be the network device or a circuit system of the network device in the embodiment shown in any one of FIG. 4 or FIG. 11, and is configured to implement the method corresponding to the network device in the foregoing method embodiment. For example, one circuit system is a chip system.

The communication apparatus 1200 includes at least one processor 1201. The processor 1201 may be configured for internal processing of the apparatus, to implement a specific control processing function. Optionally, the processor 1201 includes instructions. Optionally, the processor 1201 may store data. Optionally, different processors may be independent components, may be located at different physical positions, or may be located on different integrated circuits. Optionally, different processors may be integrated into one or more processors, for example, integrated into one or more integrated circuits.

Optionally, the communication apparatus 1200 includes one or more memories 1203 that is configured to store instructions. Optionally, the memory 1203 may further store data. The processor and the memory may be separately disposed, or may be integrated together.

Optionally, the communication apparatus 1200 includes a communication line 1202 and at least one communication interface 1204. Because the memory 1203, the communication line 1202, and the communication interface 1204 are all optional, the memory, the communication line, and the communication interface are all represented by dashed lines in FIG. 12.

Optionally, the communication apparatus 1200 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 1200 through the antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 1201 may include a general-purpose central processing unit (central processing unit, CPU), a microprocessor, an application-specific integrated circuit (application-specific integrated circuit, ASIC), or one or more integrated circuits configured to control program execution of the solutions of this application.

The communication line 1202 may include a path for transmitting information between the foregoing components.

The communication interface 1204 is any apparatus like a transceiver, and is configured to communicate with another device or a communication network, for example, Ethernet, a radio access network (radio access network, RAN), a wireless local area network (wireless local area networks, WLAN), or a wired access network.

The memory 1203 may be a read-only memory (read-only memory, ROM) or another type of static storage device that can store static information and instructions, a random access memory (random access memory, RAM) or another type of dynamic storage device that can store information and instructions, or may alternatively be an electrically erasable programmable read-only memory (electrically erasable programmable read-only memory, EEPROM), a compact disc read-only memory (compact disc read-only memory, CD-ROM) or another compact disc storage, optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of an instruction or a data structure and that can be accessed by a computer, but is not limited thereto. The memory 1203 may exist independently and is connected to the processor 1201 through the communication line 1202. Alternatively, the memory 1203 may be integrated with the processor 1201.

The memory 1203 is configured to store computer-executable instructions for performing the solutions of this application, and the processor 1201 controls execution. The processor 1201 is configured to execute the computer-executable instructions stored in the memory 1203, to implement the steps performed by the UE or the network device in the embodiment shown in any one of FIG. 4 or FIG. 11.

Optionally, the computer-executable instructions in embodiments of this application may also be referred to as application program code. This is not specifically limited in this embodiment of this application.

During specific implementation, in an embodiment, the processor 1201 may include one or more CPUs, for example, a CPU 0 and a CPU 1 in FIG. 12.

During specific implementation, in an embodiment, the communication apparatus 1200 may include a plurality of processors such as the processor 1201 and a processor 1205 in FIG. 12. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 12 is a chip, for example, a chip of UE or a chip of a network device, the chip includes a processor 1201 (which may further include a processor 1205), a communication line 1202, and a communication interface 1204. Optionally, the chip may include a memory 1203. Specifically, the communication interface 1204 may be an input interface, a pin, a circuit, or the like. The memory 1203 may be a register, a cache, or the like. The processor 1201 and the processor 1205 each may be a general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. For example, when the functional modules are obtained through division based on corresponding functions, FIG. 13 is a diagram of an apparatus. An apparatus 1300 may be the UE or the network device in the foregoing method embodiments, or a chip in the UE or a chip in the network device. The apparatus 1300 includes a sending unit 1301, a processing unit 1302, and a receiving unit 1303.

It should be understood that, the apparatus 1300 may be configured to implement the steps performed by the UE or the network device in the communication method in embodiments of this application. For related features, refer to the embodiment shown in any one of FIG. 4 or FIG. 11. Details are not described herein.

Optionally, functions/implementation processes of the sending unit 1301, the receiving unit 1303, and the processing unit 1302 in FIG. 13 may be implemented by the processor 1201 in FIG. 12 by invoking the computer-executable instructions stored in the memory 1203. Alternatively, the function/implementation process of the processing unit 1302 in FIG. 13 may be implemented by the processor 1201 in FIG. 12 by invoking the computer-executable instructions stored in the memory 1203, and the functions/implementation processes of the sending unit 1301 and the receiving unit 1303 in FIG. 13 may be implemented through the communication interface 1204 in FIG. 12.

Optionally, when the apparatus 1300 is a chip or a circuit, functions/implementation processes of the sending unit 1301 and the receiving unit 1303 may alternatively be implemented via a pin, a circuit, or the like.

This application further provides a computer-readable storage medium. The computer-readable storage medium stores a computer program or instructions. When the computer program or the instructions are run, the method performed by the UE or the network device in the foregoing method embodiment is implemented. In this way, the functions in the foregoing embodiments may be implemented in a form of a software functional unit and sold or used as an independent product. Based on such an understanding, the technical solutions of this application essentially, or the part contributing to conventional technologies, or part of the technical solutions may be implemented in a form of a software product. The computer software product is stored in a storage medium, and includes several instructions for instructing a computer device (which may be a personal computer, a server, a network device, or the like) to perform all or part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the UE or the network device in any one of the foregoing method embodiments.

An embodiment of this application further provides a processing apparatus, including a processor and an interface. The processor is configured to perform the method performed by the UE or the network device in any one of the foregoing method embodiments.

All or part of the foregoing embodiments may be implemented by using software, hardware, firmware, or any combination thereof. When software is used to implement the embodiments, all or part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive, (solid-state disk, SSD)), or the like.

Various illustrative logical units and circuits described in embodiments of this application may implement or operate the described functions by a general-purpose processor, a digital signal processor (digital signal processor, DSP), an ASIC, a field-programmable gate array (field-programmable gate array, FPGA) or another programmable logical apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, multiple microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may connect to a processor, so that the processor may read information from the storage medium and write information into the storage medium. Alternatively, the storage medium may be integrated into a processor. The processor and the storage medium may be disposed in an ASIC, and the ASIC may be disposed in a terminal device. Optionally, the processor and the storage medium may be disposed in different components of a terminal device.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Mutual reference may be made to content in embodiments of this application. Unless otherwise specified or logical conflict occurs, terms and/or descriptions in different embodiments are consistent and may be mutually referenced, and technical features in different embodiments may be combined into a new embodiment based on an internal logical relationship between the technical features.

It may be understood that, in embodiments of this application, the UE and/or the network device may perform part or all of the steps in embodiments of this application. The steps or operations are merely examples. In embodiments of this application, other operations or variations of various operations may be further performed. In addition, the steps may be performed in a sequence different from a sequence presented in embodiments of this application, and it is possible that not all operations in embodiments of this application need to be performed.

## Claims

1. A communication method, wherein the method comprises:
   determining, based on channel information corresponding to C reference signal ports of at least two terminal devices, a vector group corresponding to the C reference signal ports, wherein the vector group comprises C sub-vector groups in one-to-one correspondence with the C reference signal ports, the vector group is used to determine at least two first reference signal resource groups, the at least two first reference signal resource groups correspond to the at least two terminal devices, the at least two first reference signal resource groups correspond to C cyclic shift indexes, cyclic shift indexes that correspond to first reference signal resource groups corresponding to different terminal devices and that are in the C cyclic shift indexes are different, the C cyclic shift indexes are different, the C cyclic shift indexes are in one-to-one correspondence with the C sub-vector groups, and C is an integer greater than 1.

2. The method according to claim 1, wherein the method is applied to a first terminal device among the at least two terminal devices, and the method further comprises:

   receiving a downlink reference signal, and obtaining channel information of M terminal devices, wherein the M terminal devices belong to the at least two terminal devices, and M is a positive integer;
   determining, based on the downlink reference signal, channel information corresponding to a first reference signal port, wherein the first reference signal port belongs to the C reference signal ports, and the first reference signal port is a reference signal port of the first terminal device; and
   determining, based on the channel information corresponding to the first reference signal port and the channel information of the M terminal devices, the channel information corresponding to the C reference signal ports.

3. The method according to claim 2, wherein the method further comprises:

indicating the vector group to a network device; or

indicating, to a network device, a sub-vector group that is in the vector group and that corresponds to the reference signal port of the first terminal device; or

indicating, to a network device, a first sub-vector group in the vector group, and indicating a manner of determining at least one other sub-vector groups in the vector group based on the first sub-vector group.

4. The method according to claim 3, wherein indicating the vector group to the network device comprises:
sending first information to the network device, wherein the first information indicates all or part of elements in the vector group, all the or the part of elements belongs to all or part of vectors in the vector group, and all the or the part of vectors belongs to all or part of sub-vector groups in the vector group.

5. The method according to claim 4, wherein the first information comprises indexes of candidate values corresponding to all the or the part of elements, the candidate values corresponding to all the or the part of elements is comprised in at least one candidate value set, and the at least one candidate value set comprises one or more of the following:

a candidate value set corresponding to an amplitude of an element, wherein the candidate value set comprises a plurality of different candidate values, and each candidate value corresponds to one index;
a candidate value set corresponding to a phase of an element, wherein the candidate value set comprises a plurality of different candidate values, and each candidate value corresponds to one index;
a candidate value set corresponding to a real part of an element, wherein the candidate value set comprises a plurality of different candidate values, and each candidate value corresponds to one index;
a candidate value set corresponding to an imaginary part of an element, wherein the candidate value set comprises a plurality of different candidate values, and each candidate value corresponds to one index; or
a candidate value set corresponding to a real part and an imaginary part of an element, wherein the candidate value set comprises a plurality of different candidate values, and each candidate value corresponds to one index.

6. The method according to claim 3, wherein indicating the first sub-vector group to the network device comprises:
sending second information to the network device, wherein the first information comprises quantization information of all or part of elements in the first sub-vector group, and all the or the part of elements belongs to all or part of vectors in the first sub-vector group.

7. The method according to claim 6, wherein the first information comprises indexes of candidate values corresponding to all the or the part of elements, the candidate values corresponding to all the or the part of elements is comprised in at least one candidate value set, and the at least one candidate value set comprises one or more of the following:

a candidate value set corresponding to an amplitude of an element, wherein the candidate value set comprises a plurality of different candidate values, and each candidate value corresponds to one index;
a candidate value set corresponding to a phase of an element, wherein the candidate value set comprises a plurality of different candidate values, and each candidate value corresponds to one index;
a candidate value set corresponding to a real part of an element, wherein the candidate value set comprises a plurality of different candidate values, and each candidate value corresponds to one index;
a candidate value set corresponding to an imaginary part of an element, wherein the candidate value set comprises a plurality of different candidate values, and each candidate value corresponds to one index; or
a candidate value set corresponding to a real part and an imaginary part of an element, wherein the candidate value set comprises a plurality of different candidate values, and each candidate value corresponds to one index.

8. The method according to claim 1, wherein the method is applied to a network device, and the channel information corresponding to the C reference signal ports is determined based on at least two second reference signal resource groups corresponding to the at least two terminal devices.

9. The method according to claim 8, wherein the method further comprises:

receiving uplink reference signals from the C reference signal ports based on the at least two second reference signal resource groups; and
determining, based on the uplink reference signals, the channel information corresponding to the C reference signal ports.

10. The method according to claim 1, wherein the method is applied to a network device, and the method further comprises:
receiving the channel information corresponding to the C reference signal ports.

11. The method according to any one of claims 8 to 10, wherein the method further comprises:

indicating the vector group to a first terminal device among the at least two terminal devices; or
indicating, to a first terminal device among the at least two terminal devices, a sub-vector group that is in the vector group and that corresponds to a reference signal port of the first terminal device; or
indicating, to a first terminal device among the at least two terminal devices, a first sub-vector group in the vector group, and indicating a manner of determining at least one other sub-vector groups in the vector group based on the first sub-vector group; or
indicating the vector group via broadcasting; or
indicating, via broadcasting, a first sub-vector group in the vector group, and indicating, via broadcasting, information about a manner of determining at least one other sub-vector groups in the vector group based on the first sub-vector group.

12. The method according to any one of claims 1 to 11, wherein that the vector group is used to determine the at least two first reference signal resource groups corresponding to the at least two terminal devices comprises:
the vector group is used to determine a time domain resource and/or a frequency domain resource contained in the at least two first reference signal resource groups.

13. The method according to any one of claims 1 to 12, wherein determining, based on the channel information corresponding to the C reference signal ports of the at least two terminal devices, the vector group corresponding to the C reference signal ports comprises:

determining a first sub-vector group $B_0$ in the vector group based on the channel information corresponding to the C reference signal ports; and
determining an $i^{th}$ sub-vector group $B_i$ based on the first sub-vector group $B_0$ and a cyclic shift index corresponding to the $i^{th}$ sub-vector group $B_i$, wherein the $i^{th}$ sub-vector group $B_i$ is any sub-vector group other than the first sub-vector group $B_0$ in the vector group.

14. The method according to claim 13, wherein determining the $i^{th}$ vector group $B_i$ based on the first sub-vector group $B_0$ and the cyclic shift index corresponding to the $i^{th}$ sub-vector group $B_i$ comprises:

determining an $l^{th}$ vector $b_i^l$ in the $i^{th}$ sub-vector group $B_i$ based on an $l^{th}$ vector $b_0^l$ in the first sub-vector group $B_0$ and the cyclic shift index $c_i$ corresponding to the $i^{th}$ sub-vector group $B_i$.

15. The method according to any one of claims 1 to 14, wherein
the at least two first reference signal resource groups correspond to the C reference signal ports, and each reference signal port corresponds to a time-domain unit or a frequency-domain unit in the at least two first reference signal resource groups.

16. The method according to any one of claims 1 to 15, wherein
among the C reference signal ports, time-domain units or frequency-domain units corresponding to different reference signal ports have same relative positions in different resource groups in a first quantity of resource groups, wherein the first quantity is less than or equal to N1/C or N2/C, N1 is a quantity of time-domain units corresponding to the C reference signal ports, and N2 is a quantity of frequency-domain units corresponding to the C reference signal ports.

17. The method according to any one of claims 1 to 15, wherein
among the C reference signal ports, time-domain units or frequency-domain units corresponding to different reference signal ports have different relative positions in different resource groups in a first quantity of resource groups, wherein the first quantity is less than or equal to N1/C or N2/C, N1 is a quantity of time-domain units corresponding to the C reference signal ports, and N2 is a quantity of frequency-domain units corresponding to the C reference signal ports.

18. A communication apparatus, wherein the communication apparatus comprises a processing unit and a transceiver unit, and the processing unit is coupled to the transceiver unit, to perform the method according to any one of claims 1 to 17.

19. A communication apparatus, wherein the communication apparatus comprises a processor and a memory, the memory is configured to store a computer program, and the processor is configured to execute the computer program stored in the memory, to enable the communication apparatus to perform the method according to any one of claims 1 to 17.

20. A computer-readable storage medium, wherein the computer-readable storage medium is configured to store a computer program, and when the computer program is run on a computer, the computer is enabled to perform the method according to any one of claims 1 to 17.

21. A computer program product, wherein the computer program product comprises a computer program, and when the computer program is run on a computer, the computer is enabled to perform the method according to any one of claims 1 to 17.

22. A chip system, wherein the chip system comprises:
   a processor and an interface, wherein the processor is configured to invoke instructions from the interface and run the instructions; and when the processor executes the instructions, the method according to any one of claims 1 to 17 is implemented.

23. A communication system, wherein the communication system comprises a terminal device and a network device, wherein

   the terminal device is configured to perform the method according to any one of claims 1 to 7 and claims 12 to 17; and
   the network device is configured to perform the method according to any one of claim 1 and claims 8 to 17.

Frequency domain/
Time domain

Sparse transform by
using a <u>DFT basis</u>

UE 0          UE i          UE C−1

Delay domain/Doppler domain

FIG. 1

DFT basis

$P > 2S$          =          UE 0

...

UE i

...

$Sparsity S
of a
channel$

UE (C−1)

FIG. 2

Network
device

UE

FIG. 3

UE

...

UE

UE

Network
device

S401: Determine, based on
channel information
corresponding to C
reference signal ports of at
least two UEs, a vector
group corresponding to the
C reference signal ports

S402: Vector group or sub-vector group

S402: Vector group or sub-vector group

S402: Vector group or sub-vector group

S403: Uplink reference signal

S403: Uplink reference signal

S403: Uplink reference signal

S404: Determine a first
downlink channel based on
uplink reference signals of
the at least two UEs

S405: Determine a
downlink precoding vector
based on a second
downlink channel

FIG. 4

Vector group

Sub-vector group 1    Sub-vector group i    Sub-vector group (C–1)

UE 0

UE i

UE (C–1)

FIG. 5

Vector group

$P' < P$

UE 0

UE i

UE (C–1)

Sparsity S' of a channel < S

FIG. 6

Sparse sampling

FIG. 7

Frequency domain/Time domain

FIG. 8

$B_0$          $B_i$          $B_{C-1}$

FIG. 9

Frequency domain/
Time domain

Sparse transform by
using an <u>eigenbasis</u>

UE 0      UE i      UE C−1

Eigenspace domain

FIG. 10

UE

...

UE

First UE

Network device

S1101: Determine, based on channel information corresponding to C reference signal ports of at least two UEs, a vector group corresponding to the C reference signal ports

S1102: Channel information

S1102: Channel information

S1103: Vector group or sub-vector group

S1104: Uplink reference signal

S1104: Uplink reference signal

S1104: Uplink reference signal

S1105: Determine a first downlink channel based on uplink reference signals of the at least two UEs

S1106: Determine a downlink precoding vector based on a second downlink channel

FIG. 11

Communication
apparatus 1200

1201        1205        1203

Processor     Processor        Memory

CPU 0         CPU 0

CPU 1         CPU 1

Communication
line 1202

1204

Communication
interface

Memory

FIG. 12

Apparatus 1300

1301        1302        1303

Sending unit     Processing
unit     Receiving
unit

FIG. 13

## INTERNATIONAL SEARCH REPORT

| | International application No. |
|---|---|
| | **PCT/CN2024/124570** |

| | |
|---|---|
| **A.** | **CLASSIFICATION OF SUBJECT MATTER** |
| | H04L27/26(2006.01)i |

According to International Patent Classification (IPC) or to both national classification and IPC

| | |
|---|---|
| **B.** | **FIELDS SEARCHED** |

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

CNTXT, ENTXT, DWPI, CNKI, 3GPP: 信道, 稀疏度, 参考信号, 端口, 向量, 组, 子向量, 资源, 循环移位, 索引, channel, sparsing, sparsity, CSI, SRS, RS, reference signal, PBCH, port, vector, group, sub vector, resource, cyclic shift, cycle shift, index

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | WO 2023160442 A1 (VIVO MOBILE COMMUNICATION CO., LTD.) 31 August 2023 (2023-08-31) description, page 1 line 20 page 4 line 21 | 1-23 |
| A | US 2021175952 A1 (ZTE CORP.) 10 June 2021 (2021-06-10) entire document | 1-23 |
| A | CN 114826522 A (HUAWEI TECHNOLOGIES CO., LTD.) 29 July 2022 (2022-07-29) entire document | 1-23 |
| A | CN 115915266 A (HUAWEI TECHNOLOGIES CO., LTD.) 04 April 2023 (2023-04-04) entire document | 1-23 |
| A | OPPO. "CSI enhancement for high/medium UE velocities and coherent JT" *3GPP TSG RAN WG1 #114bis, R1-2309565*, 13 October 2023 (2023-10-13), entire document | 1-23 |

| ☐ Further documents are listed in the continuation of Box C. | ☑ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 January 2025** | **15 January 2025** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/124570**

| Patent document cited in search report | | | Publication date (day/month/year) | Patent family member(s) | | | Publication date (day/month/year) |
|---|---|---|---|---|---|---|---|
| WO | 2023160442 | A1 | 31 August 2023 | CN | 116684916 | A | 01 September 2023 |
| US | 2021175952 | A1 | 10 June 2021 | EP | 3836419 | A1 | 16 June 2021 |
| | | | | WO | 2020030160 | A1 | 13 February 2020 |
| | | | | RU | 2766559 | C1 | 15 March 2022 |
| | | | | CN | 110535497 | A | 03 December 2019 |
| CN | 114826522 | A | 29 July 2022 | WO | 2022160963 | A1 | 04 August 2022 |
| | | | | EP | 4266616 | A1 | 25 October 2023 |
| | | | | US | 2024088953 | A1 | 14 March 2024 |
| CN | 115915266 | A | 04 April 2023 | WO | 2023016508 | A1 | 16 February 2023 |
| | | | | EP | 4376479 | A1 | 29 May 2024 |
| | | | | US | 2024187283 | A1 | 06 June 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311344497